# EUROPEAN PATENT APPLICATION

(11) **EP 0 668 395 A2**
(43) Date of publication of application: **23.08.1995**
(21) Application number: 95201038.7
(22) Date of filing: 14.08.1991
(51) Int. Cl.: D21G 1/02, D21F 5/02

(54) **Heatable variable crown roll**

(30) Priority: 15.08.1990 FI 904032
(62) Divisional of application: 91850197.4
(71) Applicant: VALMET PAPER MACHINERY INC., SF-00130 Helsinki (FI)
(72) Inventor: Niskanen, Juhani, SF-90640 Oulunsalo (FI); Vestola, Juhani, SF-40630 Jyväskylä (FI)
(74) Representative: Bjerre, Nils B.J.

(57) **Abstract**

The invention concerns a heatable variable crown roll, in particular a press roll or a calender roll (10) in a paper or board machine, comprising a hollow, tubular roll mantle (12), which is provided with heating means for heating of the roll mantle, said heating means comprising ducts (1;21), formed into the roll mantle (12), and electric resistors (2) fitted in said ducts (1;21) and connected to a voltage source, said roll being provided with a non-revolving roll axle (11) arranged inside the tubular roll mantle (12) and with crown variation means (14) acting upon the inner face of the roll mantle (12). The electric resistors (2) in said ducts (1;21) in the roll mantle (12) have been divided into zones (Zi, Z₂, Z₃, Z₄) in the axial direction of the roll (10), and currents of different intensities are arranged to be fed into the different zones (Z₁, Z₂, Z₃, Z₄) to produce different heating effects in the different zones of the roll (10).

## Description

The invention concerns a heatable variable crown roll, in particular a press roll or calender roll in a paper or board machine, comprising a hollow, tubular roll mantle, which is provided with heating means for heating of the roll mantle.

Hot rolls are needed in paper machines and in paper finishing equipment at a number of locations. Some of the commonest places of use of hot rolls are calenders and presses as well as supercalen- ders. The commonest solution for heating of a roll is to introduce the heat into the roll by means of a suitable heat transfer medium, such as water or, if a roll operating at an even higher temperature is required, by means of oil. In the patent literature, a number of different methods and solutions for heating of rolls are known. The oldest prior-art solution is one in which a through hole has been drilled into the centre of a massive roll, the heat transfer medium being circulated in said hole. However, it is an essential drawback of such a solution that the distance from the heat transfer medium to the roll face is very large, for which reason efficient and economical heating cannot be achieved by means of this solution. A second, more advanced solution is one in which the roll comprises a non-revolving body of revolution on which the roll mantle is mounted as revolving. In this solution, the heat transfer medium, such as water or oil, is passed into the space between the body of revolution and the roll mantle to heat the roll mantle. One solution of this type is described, e.g., in the published EP Patent Application No. 0,188,238. However, it is an essential drawback of such a solution that the liquid quantities to be dealt with are very large. It results from this, e.g., that the power consumption of the roll is very high. Other heatable rolls accomplished with a similar construction have been described earlier, e.g., in the FI Patent Application Nos. 840458, 862189, and 864020 as well as in the published EP Pat. Appl. No. 0,158,220, A further solution for providing a hot roll is one in which a number of through bores have been formed into the roll in the axial direction, the heating medium being circulated through said bores. One such solution is described in prior art, e.g., in the Canadian Patent No. 1,223,763. All of the prior-art heatable rolls described above involve the drawback already stated above, i.e. that the liquid quantities to be dealt with are very large. It is a further drawback that, in any case, the heat transfer medium must first be heated in some suitable way, e.g. by means of electricity, whereupon the heat transfer medium is passed into the roll. The power consumption of such rolls is remarkably high.

In prior art, variable crown rolls are known which are also heatable. Such solutions are described in prior art, e.g., in the US Patents Nos. 4,282,639 and 4,679,287. In the former US Patent, the heating of the roll is arranged so that spraying devices are fitted in the interior of the roll, into which devices a heated heat transfer medium is fed, said medium being sprayed by means of said spraying devices onto the inner face of the roll mantle to heat the roll mantle. On the other hand, in the latter US Patent, the heating of the roll is arranged so that the heating medium is passed directly into the interior of the roll into the space between the stationary roll axle and the roll mantle for the purpose of heating of the roll mantle. In respect of the heating, such variable crown rolls also involve the same drawbacks as were already discussed earlier. Thus, these drawbacks are the large liquid quantities to be dealt with, the problems related to the heating of the heat transfer medium, as well as the high power consumption resulting from the large liquid quantities and from the heating of the heat transfer medium.

The object of the present invention is to provide a heatable variable crown roll wherein the power consumption of the roll has been made lower and by whose means a uniform heating of the roll mantle is achieved. In view of achieving these objectives the roll of the invention defined in the preamble of claim 1 has the features mentioned in claim 1.

A further embodiment appears from claim 2.

By means of the present invention, compared with the prior art, a number of remarkable advantages are obtained, of which, in this connection, e.g., the following should be stated. In accordance with the invention, the oil quantities to be dealt with are little and the temperature of the oil can be made to remain low. Since, in accordance with the invention, the heat is introduced very close to the roll face, the thermal strains can be made to remain low and the temperature profile of the roll can be kept substantially more uniform than in rolls heated by means of liquid. No large temperature gradient occurs in the roll mantle. In connection with a roll in accordance with the invention, it is unnecessary to use complicating devices placed outside the roll. The efficiency in respect of the heating can be made optimal, almost 100 per cent. A roll in accordance with the invention is inexpensive to manufacture. The roll can be constructed out of commercially available components. Besides the fact that the temperature profile can be made to remain uniform, with the roll in accordance with the invention the warming of the end areas of the roll can also be limited in the desired way. Further advantages and characteristic features of the invention appear from the following detailed description of the invention.

In the following, the invention will be described in detail by means of the exemplifying embodiments shown in the figures in the accompanying drawing.
Figure 1 is a longitudinal vertical view of a roll in accordance with the invention partly in section.
Figure 2 is a sectional view of a roll as shown in Fig. 1, taken along the line II-II.
Figure 3 is a partial sectional view of a second embodiment of a roll mantle in accordance with the invention.
Figure 4 is a partly sectional side view of an alternative emodiment of a roll in accordance with the invention.
Figure 5 is a partly sectional view of a further alternative embodiment of a roll in accordance with the invention.

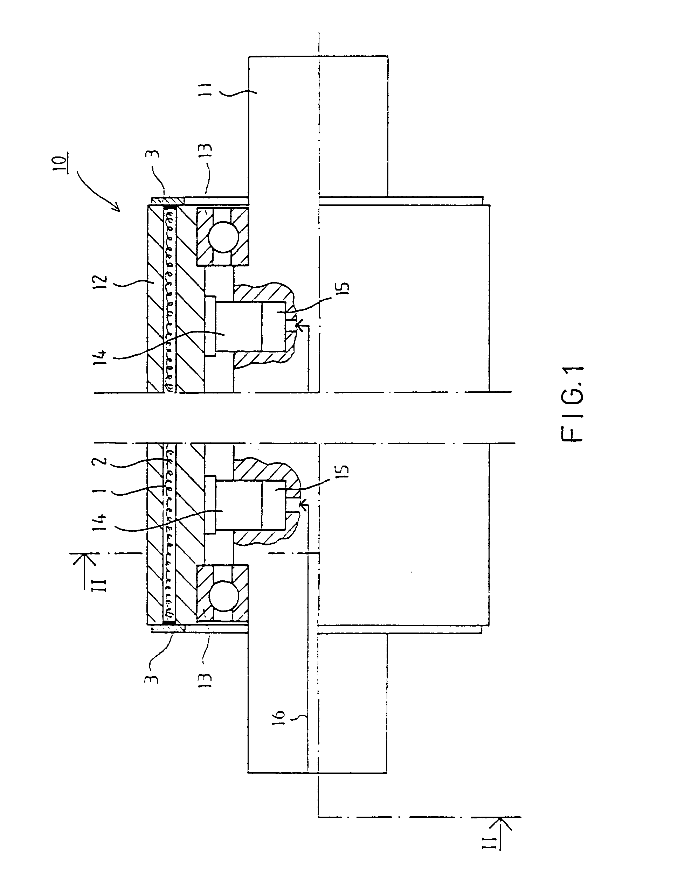

In Fig. 1, the roll in accordance with the invention is denoted generally with the reference numeral 10. The roll 10 shown in Fig. 1 is a variable crown roll comprising a stationary roll axle 11, on which the roll mantle 12 is provided revolving. The mantle 12 is mounted revolving on the roll axle 11 by means of end bearings 13. In the space between the mantle 12 and the axle 11 of the variable crown roll, hydraulic loading means 14 are provided, which are supported on the roll axle 11 and which are, on the other hand, supported against the inner face of the roll mantle 12 so that, by means of said loading means 14, the profile of the roll mantle 12 can be regulated. In the embodiment shown in Fig. 1, the pistons of the hydraulic loading means 14 are fitted in cylindrical bores 15 formed into the roll axle 11. Into said cylindrical bores 15, underneath the pistons of the hydraulic loading means 14, a pressure medium of adjustable pressure is passed along pressure ducts 16 formed into the roll axle 11.

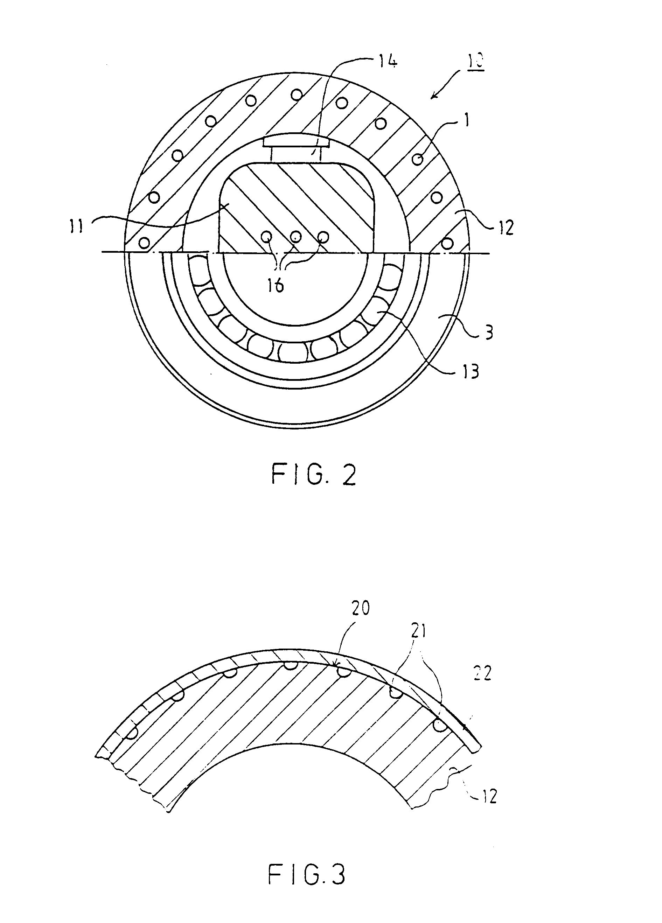

In addition to the fact that the roll shown in Figs. 1 och 2 is a variable crown roll, the roll mantle 12 is also arranged heatable. For the purpose of heating, through axial holes 1 have been formed into the roll mantle 12, said holes being, in this embodiment, preferably drilled. Into said holes 1, electric resistors 2 have been fitted over the entire length of the holes 1. At the ends of the roll mantle 12, glide rings 3 are provided, through which the electricity is supplied to said resistors 2. The holes 1 are fitted in the roll mantle 12 as close to the roll face as possible in order that the thermal strains in the roll should be as low as possible and that the temperature gradient in the mantle 12 should also be small. In Figs. 1 and 2 only one row of holes 1 has been formed into the roll mantle 12, but, if necessary, several rows of holes 1 can be formed into the roll mantle 12, the radial distances of said rows of holes from the centre axis being different. The diameter of the holes 1 does not have to be large, for even holes of a diameter of, e.g., 10 mm are sufficiently large for the resistors 2 to be passed into the holes. Above it was stated that attempts are made to place the holes 1 as close to the roll face as possible. The holes 1 can, however, not be fitted right in the roll face, for in such case the temperature of the roll face might be wave-formed. Thus, an optimal location can be found for the positioning of the holes 1, which location is chosen on the basis that said wave form of the temperature is reduced to the minimum.

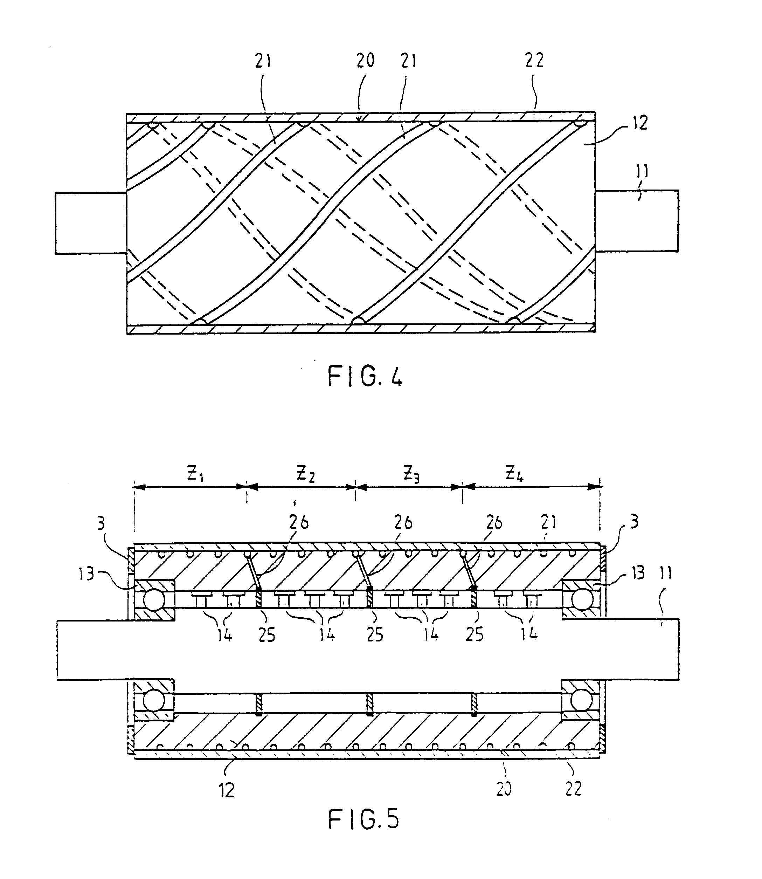

In the embodiment shown in Figs. 1 and 2, the holes 1 are formed into the roll mantle 12 preferably by drilling. The holes can also be formed into the roll in some other way, and an example of this is shown in Fig. 3. In the embodiment shown in Fig. 3, grooves 21 have been formed into the outer face of the roll mantle, and onto the roll mantle 12 an outer coating face 22 of the roll has been formed in some suitable way. In the embodiment of Fig. 3, this has been carried out so that the coating face 22 has been formed onto the roll mantle, e.g. out of steel sheet fixed by welding. The arrangement can also be accomplished so that grooves 21 of high depth are formed into the outer face 20 of the roll mantle, which grooves are then closed from the side of the outside face 20, e.g., by welding, whereby the grooves 21 become similar to the holes 1 shown in Figs. 1 and 2. Since, in the embodiment of Fig. 3, the holes provided for the electric resistors 2 were not formed into the roll by drilling, they need not necessarily be placed in the axial direction of the roll. By means of such holes, whose direction differ from the axial direction, compared with axial holes, the advantage may also be obtained that, by means of said "diagonal" holes, problems of vibration which may be related to axial holes are avoided. In a case in which the holes have not been formed into the roll by drilling, the directions of the holes can be arranged as to such an extent different from the axial direction that the holes are even spiral-shaped. An exaggerated embodiment representing such a possibility is shown in Fig. 4. In Fig. 4, spiral-shaped grooves 21 extending from end to end in the roll have been formed into the face 20 of the roll, said grooves 21 having then been covered with a suitable coating face 22. The coating face 22 may be formed onto the roll, e.g., out of steel sheet or by welding, as was already explained above.

In Fig. 5, a further embodiment of the invention is shown. The roll shown in Fig. 5 is a variable- crown roll, which comprises a stationary axle 11, in a way corresponding to Figs. 1 and 2, on which axle 11 the roll mantle 12 is arranged revolving by means of end bearings 13. Into the outer face 20 of the roll mantle 12, strongly spiral-shaped grooves 21 have been formed, which are covered from outside by means of a suitable coating face 22. In the space between the roll mantle 12 and the roll axle 11, hydraulic loading means 14 are arranged, by which the deflection profile of the roll mantle can be adjusted in the desired way. The embodiment shown in Fig. 5 differs from those described above in the respect that the roll in accordance with Fig. 5 is arranged adjustable in zones in respect of the temperature. For this purpose, out of the spiral-shaded grooves 21, or out of the ducts defined by the grooves 21 and the coating face 22, connecting bores 26 are provided into the inner face of the roll. Said connecting bores are formed into the roll mantle 12 in the axial direction of the roll uniformly spaced so that, together with the roll ends, the connecting bores 26 divide the roll into zones Z₁...Z₄ in the axial direction. Into the connecting bores 26, electric conductors are fitted, which are connected to the electric resistors 2, on one hand, and to contactors 25 fitted in the interior of the roll, on the other hand. By means of this arrangement, through the contactors 25, currents of different intensities can be fed into the different zones Z, ...Z₄ in the roll, whereby, by means of the electric resistors 2, different heating effects can be provided for the different zones Z₁...Z₄ in the roll. Thus, the roll in accordance with Fig. 5 is adjustable in zones in respect of the temperature.

As an additional embodiment of the ivention, it is suggested further that, in certain cases, it is preferable that the holes 1 or the corresponding ducts 21 formed into the roll mantle 12 are fully sealed and filled with a suitable heat transfer liquid, such as water. In such a case, the heat transfer liquid present in the ducts 1,21 equalizes the temperatures in the roll mantle 12. The heat transfer liquid does not circulate in the ducts 1,21 at all, for which reason the pressure in the ducts 1,21 becomes very high. In view of the operation of the roll 10, such an increase in pressure is, however, in no way harmful.

## Claims

1. Heatable variable crown roll, in particular a press roll or a calender roll (10) in a paper or board machine, comprising a hollow, tubular roll mantle (12), which is provided with heating means for heating of the roll mantle, said heating means comprising ducts (1;21) or equivalent, which have been formed into the roll mantle (12) and extend from end to end in the roll, and electric resistors (2) fitted in said ducts (1;21) and connected to a voltage source to heat said electric resistors inside the body material of the roll mantle (12), said roll being provided with a non-revolving roll axle (11) arranged inside the tubular roll mantle (12) and with crown variation means (14) acting upon the inner face of the roll mantle (12), characterized in that the electric resistors (2) in said ducts (1;21) or equivalent in the roll mantle (12) have been divided into zones (Zi, Z₂, Z₃, Z₄) in the axial direction of the roll (10), and that currents of different intensities are arranged to be fed into different zones (Zi , Z₂, Z₃, Z₄) to produce different heating effects in the different zones of the roll (10).

2. Roll as claimed in claim 1, characterized in that the electric heating zones (Zi , Z₂, Z₃, Z₄) are formed by glide rings (3) fitted at the ends of the roll mantle (12), contactors (25) fitted on the roll axle (11) in the interior of the roll, and electric conductors fitted in transverse connecting bores (26) or equivalent and connected to said electric resistors (2) and to said contactors (25), so that through said glide rings (3) and said contactors (25) currents of different intensities are fed into the different zones (Z₁ ...Z₄) in the roll.
